# EUROPÄISCHE PATENTSCHRIFT

(11) **EP 1 643 580 B1**
(45) Veröffentlichungstag und Bekanntmachung des Hinweises auf die Patenterteilung: **27.01.2010**
(21) Anmeldenummer: 05020771.1
(22) Anmeldetag: 23.09.2005
(51) Int. Cl.: H01M 4/86, H01M 8/10, H01M 4/88, C25B 9/10, B05D 3/12, B05D 5/00

(54) **Vefahren zur Herstellung eines elektrolytischen Katalysatorträgers, elektrolytischer Katalysatorträger und elektrochemische Elektrode**
Method for producing an electrolytic catalyst support, electrolytic catalyst support and electrochemical electrode
Procédé de fabrication d'un support electrolytique de catalyseur, support electrolytique de catalyseur et électrode électrochimique

(30) Priorität: 23.09.2004 DE 102004047587
(43) Veröffentlichungstag der Anmeldung: 05.04.2006
(73) Patentinhaber: Deutsches Zentrum für Luft- und Raumfahrt e.V., 51147 Köln (DE)
(72) Erfinder: Kaz, Till, 70186 Stuttgart (DE); Wagner, Norbert, Dr., 71065 Sindelfingen (DE)
(74) Vertreter: Hoeger, Stellrecht & Partner Patentanwälte

(56) Entgegenhaltungen:
- WO-A-2004/075322
- US-A- 4 272 353
- US-A- 5 761 793
- US-A1- 2003 096 154
- US-A1- 2004 086 632
- US-B1- 6 576 363

## Beschreibung

Die Erfindung betrifft ein Verfahren zur Herstellung eines elektrolytischen Katalysatorträgers für elektrochemische Anwendungen.

Die Erfindung betrifft ferner einen elektrolytischen Katalysatorträger für elektrochemische Anwendungen.

Weiterhin betrifft die Erfindung eine elektrochemische Elektrode.

Die Leistungsfähigkeit von beispielsweise Polymer-Elektrolyt-Brennstoffzellen hängt im Wesentlichen von der für die elektrochemischen Reaktionen zur Verfügung stehenden aktiven Katalysator-Oberfläche ab. Die Katalysator-Oberflache kann nur aktiv sein, wenn sie an einen Elektrolyten angebunden ist.

Aus der US 2004/0086632 A1 ist ein Verfahren zur Beschichtung einer Ionen-Austauschmembran mit einer Katalysatorschicht bekannt.

Aus der US 5,761,793 ist ein Verfahren für die Herstellung eines Teils einer elektrochemischen Zelle bekannt, bei dem ein katalytisches Pulver hergestellt wird, welches Elektrodenmaterial, Katalysatormaterial und Elektrolytmaterial umfasst. Die katalytische Schicht wird durch Aufbringen des katalytischen Pulvers auf einem Träger hergestellt.

Aus der US 6,576,363 B1 ist ein Verfahren für die Vorbereitung einer elektrochemischen Elektrode bekannt, bei dem ein Katalysatormaterial und ein Elektrolytmaterial vermischt wird.

Der Erfindung liegt die Aufgabe zugrunde, ein Verfahren zur Herstellung eines elektrolytischen Katalysatorträgers für elektrochemische Anwendungen bereitzustellen, mittels welchem sich eine effektive Anbindung zwischen dem Katalysator und dem Elektrolyten erzielen lässt.

Diese Aufgabe wird bei dem genannten Verfahren erfindungsgemäß dadurch gelöst, dass auf ein Substrat aus Elektrolytmaterial Partikel des Elektrolytmaterials aufgebracht werden, wobei das Substrat aufgeheizt wird und/oder die aufzubringenden Partikel aufgeheizt werden, und anschließend auf eine Oberflächenlage aus Elektrolytmaterial Katalysatormaterial aufgebracht wird.

Es wird dadurch ein Elektrolyt mit einer vergrößerten, porösen Oberfläche bereitgestellt. Die Oberfläche hat eine dreidimensionale Struktur. Dadurch können handelsübliche Substrate mit "glatter" Ober-Fläche derart modifiziert werden, dass ein Elektrolyt mit bezüglich der Katalysatoranbindung großer aktiver Oberfläche bereitgestellt wird.

Modellrechnungen zeigen, dass sich im Vergleich zu einem Substrat mit glatter Oberfläche eine Oberflächenvergrößerung um den Faktor vier oder mehr erreichen lässt.

Durch die Erhitzung des Elektrolytmaterials lässt sich eine Verbindung zwischen dem Substrat und den Elektrolytmaterial-Partikeln erreichen und zwischen den Elektrolytmaterial-Partikeln untereinander erreichen. Es lässt sich dadurch eine Oberflächenlage (die dann eine Grenzlage zum Katalysator ist) aufsintern. Es wird dabei die chemische Struktur des Elektrolytmaterials und damit dessen elektrolytische Eigenschaften im Wesentlichen nicht verändert, wobei über die Erhitzung eine Bindung zwischen Substrat und Elektrolytmaterial-Partikeln bewirkt wird.

Dadurch ist sichergestellt, dass die aufgebrachten Elektrolytmaterial-Partikel elektrolytisch wirksam sind.

Bei einem elektrolytischen Katalysatorträger, welcher mit dem erfindungsgemäßen Verfahren hergestellt ist, läßt sich eine im wesentlichen vollständige Anbindung des Katalysators an den Elektrolyten erreichen. Eine entsprechend hergestellte Elektrode weist dadurch eine hohe Leistungsfähigkeit auf.

Weiterhin wird die Porosität im Katalysatormaterial erhöht, da die vergrößerte Elektrolyt-Oberfläche zur Porosität in einer Katalysatorschicht, welche auf dem Elektrolyten angeordnet ist, beiträgt. Dadurch wiederum lassen sich gasförmige Reaktanten effektiver umsetzen. Auch dies trägt zur Erhöhung der Leistungsfähigkeit bei.

Ganz besonders vorteilhaft ist es, wenn das Elektrolytmaterial über seine Glastemperatur aufgeheizt wird. Dadurch läßt sich eine Bindung der aufgebrachten Elektrolytmaterial-Partikel an das Substrat erreichen, um eine Elektrolyt-Oberfläche mit dreidimensionaler Struktur zu bilden. Die Temperatur wird dabei so niedrig gewählt, daß keine chemische Zersetzung des Elektrolytmaterials erfolgt. Dadurch ist die elektrolytische Aktivität eines hergestellten Katalysatorträgers gewährleistet.

Das Substrat ist beispielsweise eine Membran oder eine Folie. Solche Membrane wie beispielsweise perfluorierte Membrane sind käuflich erhältlich. Diese weisen eine glatte Oberfläche auf. Über das erfindungsgemäße Verfahren lassen sich solche Substrate modifizieren, um eine rauhe, poröse Oberfläche herzustellen.

Beispielsweise wird zur Herstellung einer rauhen, porösen Oberfläche Elektrolytmaterial auf das Substrat trocken aufgesprüht. Solche Sprühverfahren sind beispielsweise in der DE 195 09 748 C2, der DE 101 12 232 A1, der nicht-vorveröffentlichten deutschen Patentanmeldung Nr. 10 2004 017 161.0 vom 31. März 2004 und der nicht-vorveröffentlichten deutschen Patentanmeldung Nr. 10 2004 017.162.9 vom 31. März 2004 beschrieben.

Beispielsweise wird dazu das Substrat relativ zu einer oder mehreren Düsen bewegt. Es können dabei die Düse oder Düsen an dem Substrat vorbeigeführt werden oder das Substrat kann an den Düsen vorbeigeführt werden.

Es hat sich als günstig erwiesen, wenn die Partikelgröße des aufzubringenden Elektrolytmaterials im Bereich zwischen 0,5 µm und 50 µm und insbesondere im Bereich zwischen 2 µm und 20 µm liegt. Die entsprechenden Partikel lassen sich beispielsweise durch Mahlen von käuflich erhältlichem Granulat (wie NAFION-Granulat) herstellen.

Grundsätzlich ist es möglich, daß das Substrat und/oder die Elektrolytmaterial-Partikel beispielsweise über einen oder mehrere Infrarotstrahler beheizt werden. Es hat sich als günstig erwiesen, wenn das Substrat beheizt wird und dabei über eine der Aufbringseite abgewandten Seite beheizt wird. Dadurch lassen sich Elektrolytmaterial-Partikel auf einfache Weise aufbringen und der fertigungstechnische Aufwand ist gering gehalten.

Insbesondere wird das Substrat in Wärmekontakt mit einem Heizkörper gebracht. Der Heizkörper heizt aktiv oder passiv das Substrat auf. Der Heizkörper kann dabei an einer oder mehreren Walzen und insbesondere Transportwalzen realisiert sein. Über Walzen, welche das Substrat an einer oder mehreren Düsen vorbeitransportieren, kann dann gleichzeitig eine Beheizung des Substrats insbesondere über die Glastemperatur erfolgen.

Es ist insbesondere vorgesehen, daß Katalysatormaterial in der Form von Pulverpartikeln aufgebracht wird. Dadurch läßt sich eine Porenstruktur in einer Katalysatorschicht ausbilden.

Insbesondere ist die mittlere Partikelgröße der Katalysator-Partikel kleiner als die mittlere Partikelgröße des Elektrolytmaterials. Dadurch läßt sich eine im wesentlichen vollständige Anbindung des Katalysators an den Elektrolyten erreichen. Es laßt sich dadurch auch eine multimodale Porenstruktur in einer Katalysatorschicht herstellen, da die Porengrößen dann sowohl durch die mittleren Partikelgrößen des Katalysatormaterials als auch des Elektrolytmaterials bestimmt sind. Man erhält dann mindestens zwei unterschiedliche Porengrößen-Moden. Durch die Erhöhung der Porosität in der Katalysatorschicht wird wiederum die Beaufschlagungsfläche für gasförmige Reaktanten mit dem Katalysator erhöht. Dies kann zu einer Erhöhung der Leistungsfähigkeit beispielsweise einer Elektrode beitragen.

Es kann beispielsweise vorgesehen sein, daß Katalysatormaterial auf den elektrolytischen Katalysatorträger aufgesprüht wird. Insbesondere läßt sich dann in einer Vorrichtung, welche (Sprüh-) Düsen für Elektrolytmaterial und Katalysatormaterial hat, ein entsprechender elektrolytischer Katalysatorträger mit einer Katalysatorschicht integral herstellen.

Günstig ist es, wenn die Erhitzungszeit kleiner als drei Minuten ist, wobei sich dies insbesondere auf den Gesamtvorgang einschließlich Aufbringung des Katalysatormaterials bezieht. Dadurch wird sichergestellt, daß sich der Elektrolyt nicht chemisch verändert.

Ganz besonders vorteilhaft ist es, wenn die Oberfläche des Elektrolyten im Vergleich zu dem Elektrolytmaterial-Substrat über die aufgebrachten Partikel vergrößert wird. Die Oberflächenvergrößerung erfolgt dabei mindestens um einen Faktor drei im Vergleich zu einer glatten Membranoberfläche. Durch eine entsprechende rauhe, poröse Oberfläche läßt sich eine im wesentlichen vollständige Anbindung an den Katalysator erreichen.

Aus dem gleichen Grund ist es günstig, wenn für die Oberfläche des Elektrolyten im Vergleich zu dem Elektrolytmaterial-Substrat eine dreidimensionale Oberflächenstruktur hergestellt ist. Durch diese dreidimensionale Oberflächenstruktur wird die Oberfläche effektiv vergrößert. Dadurch läßt sich die Katalysatoranbindung stark verbessern und es läßt sich insbesondere eine im wesentlichen vollständige (Grenzflächen-) Anbindung erreichen.

Der Erfindung liegt ferner die Aufgabe zugrunde, einen elektrolytischen Katalysatorträger für elektrochemische Anwendungen bereitzustellen, bei welchem eine effektive Anbindung zwischen Katalysator und Elektrolyten vorliegt.

Diese Aufgabe wird erfindungsgemäß dadurch gelöst, daß die Elektrolyt-Oberfläche/-Grenzfläche durch an ein Elektrolytmaterial-Substrat gebundene Elektrolytmaterial-Partikel hergestellt ist.

Die Elektrolytmaterial-Partikel liegen in gebundener Form vor und nicht mehr in Partikelform. Aufgrund ihrer "ehemaligen" Partikelform wird eine rauhe, poröse Elektrolyt-Oberfläche erzeugt, über welche eine effektive Katalysator-Elektrolyt-Anbindung realisierbar ist.

Der erfindungsgemäße elektrolytische Katalysatorträger weist die bereits im Zusammenhang mit dem erfindungsgemäßen Verfahren erläuterten Vorteile auf.

Weitere vorteilhafte Ausführungsformen wurden ebenfalls bereits im Zusammenhang mit dem erfindungsgemäßen Verfahren erläutert.

Insbesondere weist die Elektrolyt-Oberfläche/-Grenzfläche eine Struktur auf, welche durch das Aufbringen von Elektrolytmaterial-Partikeln auf das Elektrolytmaterial-Substrat gebildet wird, wobei das Elektrolytmaterial-Substrat beim Aufbringen des Elektrolytmaterial-Partikel aufgeheizt ist und/oder die Elektrolytmaterial-Partikel beim Aufbringen aufgeheizt sind. Bei einer solchen Elektrolyt-Oberfläche (bzw. bei aufgebrachtem Katalysatormaterial der Elektrolyt-Grenzfläche) wird eine effektive Anbindung an den Katalysator erreicht.

Insbesondere ist die Elektrolyt-Oberfläche/-Grenzfläche an einer Membran gebildet.

Insbesondere weist die Porenstruktur einer aufgebrachten Katalysatorschicht mindestens eine Mode auf, welche von der Elektrolyt-Oberfläche verursacht ist. Wenn die Elektrolyt-Oberfläche glatt ist, wie beispielsweise wenn als Substrat eine unbehandelte Membran eingesetzt wird, dann ist die Porenstruktur in einer aufgebrachten Katalysatorschicht allein durch das Aufbringverfahren der Katalysatorschicht einschließlich der Art des Katalysatormaterials bestimmt. Bei der erfindungsgemäßen Lösung wird eine rauhe, poröse Elektrolyt-Oberfläche bereitgestellt, die zur Porenbildung in der Katalysatorschicht beiträgt. Es ist insbesondere mindestens eine Mode in der Porenstruktur der Katalysatorschicht vorhanden, welche auf den Elektrolyten zurückzuführen ist. Diese mindestens eine Mode ist insbesondere durch die mittlere Partikelgröße von auf das Substrat aufgebrachten Elektrolytmaterial-Partikeln bestimmt.

Ganz besonders vorteilhaft ist es, wenn die Porenstruktur einer aufgebrachten Katalysatorschicht multimodal ist. Die Porenstruktur in einer Katalysatorschicht ist grundsätzlich, wenn Katalysator in Pulverform aufgebracht wird, durch die Partikelgrößenverteilung im Pulver bestimmt. Es ist dabei vorteilhaft, wenn Poren vorliegen, da dadurch die innere Benetzung des Katalysators mit gasförmigen Reaktanten erhöht wird. Dadurch, daß die Elektrolyt-Oberfläche vor Aufbringen des Katalysatormaterials eine Porenstruktur aufweist, wird die Porenausbildung in der Katalysatorschicht beeinflußt. Insbesondere bilden sich Poren in einer Größenverteilung entsprechend der Größenverteilung von aufgebrachten Elektrolytmaterial-Partikeln auf. Die Porenverteilung der Katalysatorschicht ist dann vorzugsweise mindestens multimodal, wobei mindestens eine Mode auf die Katalysatormaterial-Partikel zurückzuführen ist und mindestens eine weitere Mode auf die Elektrolytmaterial-Partikel bei der Herstellung der Elektrolyt-Oberfläche zurückzuführen ist.

Es sind dann Porengrößen im Katalysator entsprechend der Größen der Elektrolytmaterial-Partikel vorhanden.

Der erfindungsgemäße elektrolytische Katalysatorträger ist insbesondere gemäß dem erfindungsgemäßen Verfahren hergestellt.

Mittels des erfindungsgemäßen Verfahrens und mittels des erfindungsgemäßen elektrolytischen Katalysatorträgers läßt sich eine elektrochemische Elektrode wie beispielsweise eine Elektrode für eine Polymer-Elektrolyt-Brennstoffzelle realisieren, welche eine verbesserte Leistungsfähigkeit aufweist. Diese verbesserte Leistungsfähigkeit ist darauf zurückzuführen, daß eine effektive und im wesentlichen vollständige Katalysator-Elektrolyt-Anbindung erreicht wird. Weiterhin ist eine vorteilhafte Porenstruktur erreicht, die insbesondere multimodal ist.

Die nachfolgende Beschreibung einer bevorzugten Ausführungsform dient im Zusammenhang mit der Zeichnung der näheren Erläuterung der Erfindung:
Es zeigen:
- Figur 1: schematisch Teilschritte eines Ausführungsbeispiels eines erfindungsgemäßen Herstellungsverfahrens;
- Figur 2: eine elektronenmikroskopische Aufnahme einer Oberfläche eines mittels des erfindungsgemäßen Verfahrens hergestellten elektrolytischen Katalysatorträgers;
- Figur 3: eine elektronenmikroskopische Schnittaufnahme eines Ausführungsbeispiels eines erfindungsgemäßen elektrolytischen Katalysatorträgers mit aufgebrachter Katalysatorschicht, und
- Figur 4: ein Meßdiagramm der Größenverteilung von Poren in einer Katalysatorschicht auf einem Elektrolyten, welcher mittels des erfindungsgemäßen Verfahrens hergestellt wurde.

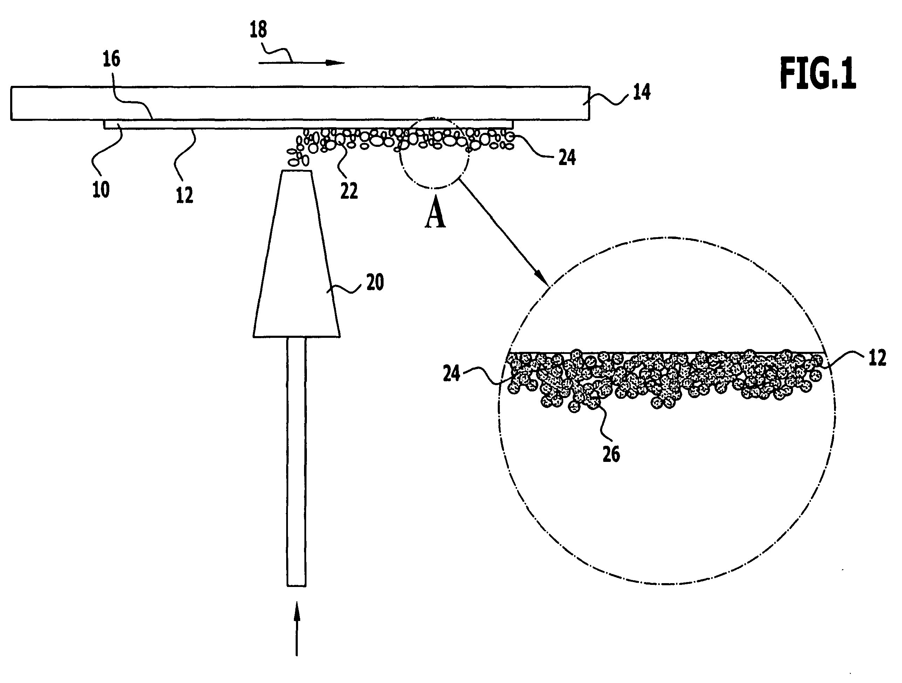

Bei einem Ausführungsbeispiel des erfindungsgemäßen Verfahrens zur Herstellung eines elektrolytischen Katalysatorträgers wird, wie in Figur 1 schematisch gezeigt, von einem Substrat 10 aus einem Elektrolytmaterial ausgegangen. Das Substrat 10 liegt insbesondere in Folienform oder Membranform vor.

Das Substrat 10 ist beispielsweise eine perfluorierte Membran aus NAFION (NAFION ist eine eingetragene Marke der E.I. du Pont de Nemour and Co., Wilmington, USA). Das Substrat 10 weist eine glatte Oberfläche 12 auf.

Das Substrat 10 wird erhitzt. Dies kann beispielsweise über Infrarotstrahlung erfolgen. Bei dem in Figur 1 gezeigten Ausführungsbeispiel ist ein Heizkörper 14 vorgesehen, welcher aktiv oder passiv beheizt ist. Das Substrat 10 ist über eine der Oberfläche 12 abgewandten Seite 16 in Wärmekontakt mit dem Heizkörper 14 gebracht. Über den Heizkörper 14 wird das Substrat 10 von der Seite 16 her beheizt.

Der Heizkörper 14 ist in einer Richtung 18 beweglich. Mit dem Heizkörper 14 kann das Substrat 10 in der Richtung 18 bewegt werden.

Es ist beispielsweise auch möglich, daß zum Transport des Substrats 10 in der Richtung 18 ein oder mehrere Walzen vorgesehen sind. Insbesondere ist dann ein Heizkörper über eine oder mehrere solcher Walzen gebildet; die Transportwalzen sind bei diesem Ausführungsbeispiel beheizbar, um das Substrat 10 aufzuheizen.

Das Substrat 10 wird über den Heizkörper 14 bzw. über einen oder mehrere Infrarotstrahler über die Glastemperatur des Elektrolytmaterials aufgeheizt, so daß die Oberfläche 12 weich und klebrig wird, ohne daß eine chemische Zersetzung eintritt.

Beispielsweise wird das Elektrolytmaterial-Substrat 10 aus NAFION auf eine Temperatur von ca. 140 °C bis 160 °C erhitzt.

Auf die Oberfläche 12 wird dann über eine oder mehrere Düsen 20 Elektrolytmaterial 22 (nämlich das gleiche Material, aus dem das Substrat 10 hergestellt ist) in Pulverform auf die Oberfläche 12 aufgebracht. Insbesondere werden Elektrolytmaterial-Partikel auf die Oberfläche 12 trocken aufgesprüht.

Pulverpartikel-Aufbringverfahren und Aufbringvorrichtungen für Pulverpartikel und insbesondere Sprühverfahren sind in den nicht-vorveröffentlichten deutschen Patentanmeldungen Nr. 10 2004 017 161.0 vom 31. März 2004 und 10 2004 017 162.9 vom 31. März 2004 offenbart. Ferner sind Sprühverfahren in der DE 195 09 748 C2 und in der DE 101 12 232 A1 offenbart.

Das auf die Oberfläche 12 aufzubringende Elektrolytmaterial 22 wird beispielsweise dadurch hergestellt, daß ein NAFION-Granulat in einer Kryomühle gemahlen wird. In dem erzeugten Pulver liegen NAFION-Partikel im Größenbereich zwischen ca. 2 µm und 20 µm vor. Diese Partikel werden auf die Oberfläche 12 aufgesprüht.

Das Elektrolytmaterial 22 trifft auf die heiße Oberfläche 12. Entsprechende Pulverpartikel werden dadurch selber aufgeheizt und insbesondere über die Glastemperatur geheizt. Es bildet sich dadurch ein Verbund zwischen der Oberfläche 12 und den Elektrolytmaterial-Partikeln aus und zwischen den Elektrolytmaterial-Partikeln untereinander. Auf dem Substrat 10 wird dadurch eine Oberflächenlage 24 gebildet. Diese Oberflächenlage 24 ist in Figur 1 schematisch als vergrößerter Bereich A dargestellt. Die Oberflächenlage 24 ist durch Aufsintern von Elektrolytmaterial-Partikeln 22 auf das Substrat 10 gebildet.

Der Elektrolyt des elektrolytischen Katalysatorträgers ist durch die Kombination des Substrats 10 mit der Oberflächenlage 24 gebildet.

Alternativ oder zusätzlich kann eine Aufheizung der aufzubringenden Elektrolytmaterial-Partikel über die Glastemperatur des Elektrolytmaterials vorgesehen werden. Auch dadurch läßt sich eine Oberflächenlage mit an das Substrat 10 gebundenen und untereinander gebundenen Elektrolytmaterial-Partikeln herstellen.

Anschließend wird auf die Oberflächenlage 24 Katalysatormaterial aufgebracht und insbesondere in Pulverform trocken aufgesprüht. Eine typische mittlere Größe von Katalysator-Partikeln liegt dabei bei ca. 30 nm.

Die Erhitzungszeit des Substrats 10 wird kleiner als drei Minuten gehalten einschließlich des Aufbringungsschritts von Katalysatormaterial.

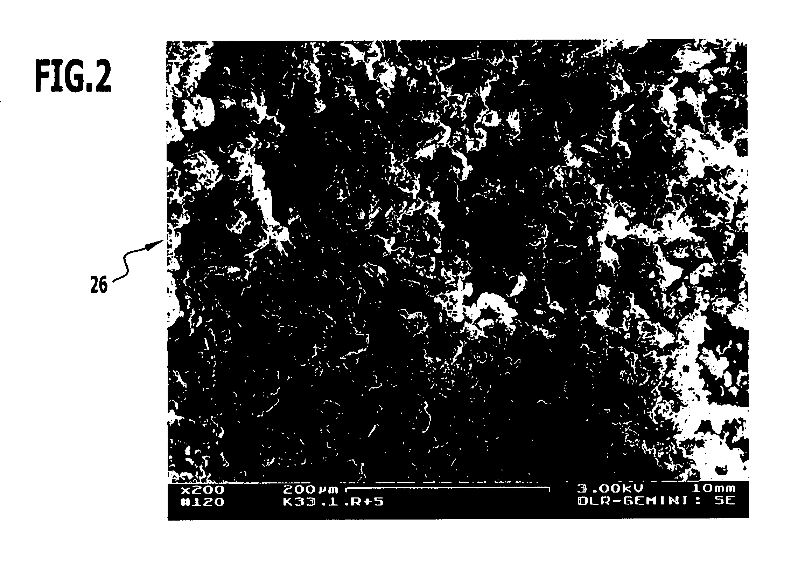

Durch das Aufbringen der Elektrolytmaterial-Partikel auf das über die Glastemperatur erhitzte Substrat 10 wird ein elektrolytischer Katalysatorträger bereitgestellt, welcher eine rauhe Oberfläche (im Gegensatz zu der glatten Oberfläche des ursprünglichen Substrats 10) aufweist mit einer dreidimensionalen Oberflächenstruktur. In Figur 2 ist eine elektronenmikroskopische Aufnahme der Oberflächenstruktur des Elektrolyten vor dem Aufbringen von Katalysatormaterial gezeigt. Es liegt eine dreidimensionale Oberflächenstruktur vor und die Oberfläche ist im Vergleich zu der Oberfläche 12 des Substrats 10 stark vergrößert.

Modellrechnungen zeigen, daß sich die Oberfläche des Elektrolyten im Vergleich zu der "glatten" Oberfläche 12 des Substrats 10 um einen Faktor vier oder mehr erhöhen läßt.

Die in Figur 2 dargestellte Oberfläche ist eine Grenzfläche, wenn eine Katalysatorschicht aufgebracht ist. Es ist ein grundsätzliches Ziel, die aktive Katalysator-Oberfläche möglichst groß zu wählen. Beispielsweise hängt die Belastungsfähigkeit einer Elektrode in einer Polymer-Elektrolyt-Brennstoffzelle (PEFC) wesentlich von der für die elektrochemischen Reaktionen zur Verfügung stehenden aktiven Katalysator-Oberfläche ab. Die Katalysator-Oberfläche kann aber nur aktiv sein, wenn sie an den Elektrolyten angebunden ist. Mittels des erfindungsgemäßen Verfahrens wird die aktive Oberfläche des Elektrolyten über die Oberflächenlage 24 vergrößert und damit die Katalysatoranbindung stark verbessert. Dadurch läßt sich auch die aktive Katalysator-Oberfläche (als Katalysator-Elektrolyt-Grenzfläche) erhöhen.

Mittels des erfindungsgemäßen Verfahrens wird eine rauhe, poröse Elektrolyt-Oberfläche hergestellt, über welche sich eine effektive Katalysatoranbindung erzielen läßt. Es läßt sich eine im wesentlichen vollständige Katalysatoranbindung an die Elektrolyt-Oberfläche 26 erreichen.

Die Porosität der Elektrolyt-Oberfläche 26 ist durch die Partikelgröße des aufgebrachten Elektrolytmaterials 22 bestimmt.

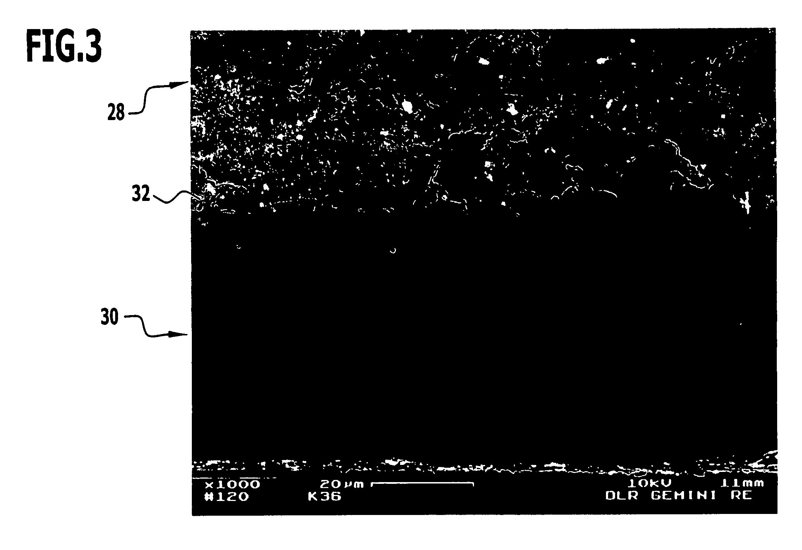

In Figur 3 ist eine mikroskopische Schnittaufnahme eines mittels des erfindungsgemäßen Verfahrens hergestellten elektrolytischen Katalysatorträgers mit aufgebrachter Katalysatorschicht 28 gezeigt. Die Katalysatorschicht 28 ist auf den Elektrolyten 30 aufgebracht. Dieser weist eine rauhe, poröse Grenzfläche 32 zur Katalysatorschicht 28 auf.

Der hergestellte elektrolytische Katalysatorträger mit Katalysator ist folienförmig bzw. membranförmig ausgebildet. Er weist in der Katalysatorschicht 28 eine Porosität auf, die multimodal ist. Es liegen dabei mindestens zwei unterschiedliche mittlere Porengrößen vor, wobei mindestens eine erste mittlere Porengröße durch die Größe der aufgebrachten Katalysator-Partikel bestimmt ist und mindestens eine weitere mittlere Porengröße durch die mittlere Größe der aufgebrachten Elektrolytmaterial-Partikel bestimmt ist.

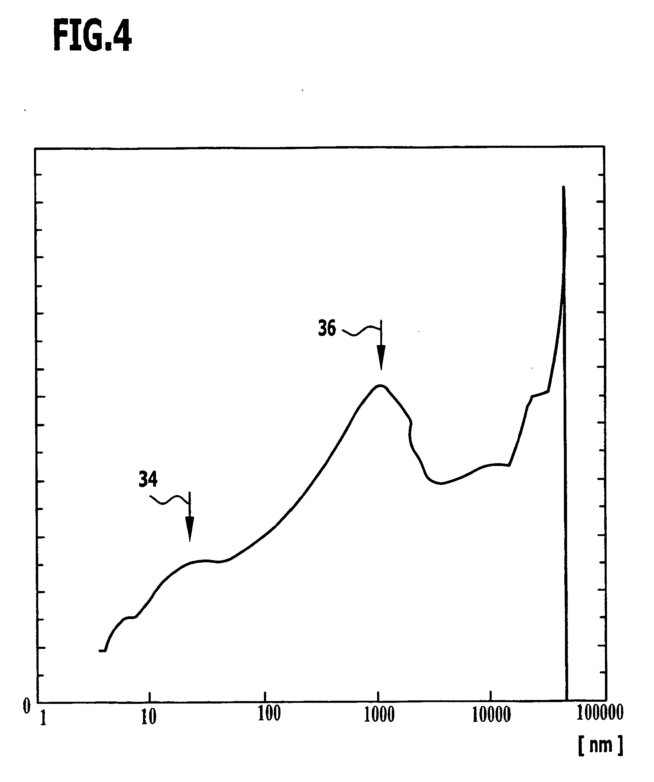

In Figur 4 ist ein Meßdiagramm der Verteilung der Porenradien (Abszisse) in einer Katalysatorschicht 28 eines erfindungsgemäß hergestellten elektrolytischen Katalysatorträgers gezeigt. Die Abszisse hat eine logarithmische Skala. Die Größenangaben sind in Nanometer. Die Katalysatorschicht umfaßt 20 % Pt. Der Elektrolyt ist Vulcan NAFION 1135.

Die Messung erfolgte über Quecksilber-Porosimetrie.

Man erkennt bei ca. 30 nm eine Mode (angedeutet mit dem Pfeil 34). Die mittlere Partikelgröße von aufgesprühtem Katalysatormaterial zur Bildung der Katalysatorschicht 28 liegt bei ca. 30 nm.

Weiterhin ist eine Mode 36 bei ca. 1500 nm erkennbar. Wenn Katalysatormaterial direkt auf ein Membran-Substrat 10 aufgebracht wird, dann ist diese Mode 36 nicht vorhanden. Sie entsteht dadurch, daß Elektrolytmaterial-Partikel auf das Substrat 10 aufgesintert werden und dadurch eine poröse Elektrolyt-Oberfläche bzw. -Grenzfläche 32 hergestellt wird, die Einfluß auf die Porenstruktur der Katalysatorschicht 28 hat.

Es ist dabei anzumerken, daß in Figur 4 die Größenverteilung der Poren gezeigt ist. Poren, deren Größe durch die Größe von aufgebrachten Katalysatormaterial-Partikeln bestimmt sind, sind häufiger als Poren, deren Größe durch Elektrolytmaterial-Partikel bestimmt sind.

Insgesamt wird über die Oberflächenlage 24 die Porosität in der Katalysatorschicht 28 erhöht, wodurch wiederum die elektrochemischen Eigenschaften verbessert werden.

Ein erfindungsgemäßer elektrolytischer Katalysatorträger mit einer Katalysatorschicht läßt sich insbesondere für elektrochemische Elektroden beispielsweise für Polymer-Elektrolyt-Brennstoffzellen einsetzen.

## Patentansprüche

1. Verfahren zur Herstellung eines elektrolytischen Katalysatorträgers mit Katalysatorschicht für elektrochemische Anwendungen, bei dem auf ein Substrat aus Elektrolytmaterial Partikel des Elektrolytmaterials aufgebracht werden, wobei das Substrat aufgeheizt wird und/oder die aufzubringenden Partikel aufgeheizt werden, und anschließend auf eine Oberflächenlage aus Elektrolytmaterial Katalysatormaterial aufgebracht wird.

2. Verfahren nach Anspruch 1, **dadurch gekennzeichnet, dass** das Elektrolytmaterial über seine Glastemperatur aufgeheizt wird.

3. Verfahren nach Anspruch 1 oder 2, **dadurch gekennzeichnet, dass** das Substrat eine Membran ist.

4. Verfahren nach einem der vorangehenden Ansprüche, **dadurch gekennzeichnet, dass** das Elektrolytmaterial auf das Substrat trocken aufgesprüht wird.

5. Verfahren nach Anspruch 4, **dadurch gekennzeichnet, dass** das Substrat relativ zu einer oder mehreren Düsen bewegt wird.

6. Verfahren nach einem der vorangehenden Ansprüche, **dadurch gekennzeichnet, dass** die Partikelgröße des aufzubringenden Elektrolytmaterials im Bereich zwischen 0,5 µm und 50 µm liegt.

7. Verfahren nach einem der vorangehenden Ansprüche, **dadurch gekennzeichnet, dass** die Partikelgröße des auf das Substrat aufzubringenden Elektrolytmaterials im Bereich zwischen 2 µm und 20 µm liegt.

8. Verfahren nach einem der vorangehenden Ansprüche, **dadurch gekennzeichnet, dass** das Substrat über eine der Aufbringseite abgewandten Seite beheizt wird.

9. Verfahren nach Anspruch 8, **dadurch gekennzeichnet, dass** das Substrat in Wärmekontakt mit einem Heizkörper gebracht wird.

10. Verfahren nach einem der vorangehenden Ansprüche, **dadurch gekennzeichnet, dass** Katalysatormaterial in der Form von Pulverpartikeln aufgebracht wird.

11. Verfahren nach Anspruch 10, **dadurch gekennzeichnet, dass** die mittlere Partikelgröße des Katalysatormaterials kleiner ist als die mittlere Partikelgröße des Elektrolytmaterials.

12. Verfahren nach einem der vorangehenden Ansprüche, **dadurch gekennzeichnet, dass** Katalysatormaterial auf den elektrolytischen Katalysatorträger aufgesprüht wird.

13. Verfahren nach einem der vorangehenden Ansprüche, **dadurch gekennzeichnet, dass** die Erhitzungszeit kleiner als 3 Minuten ist.

14. Verfahren nach einem der vorangehenden Ansprüche, **dadurch gekennzeichnet, dass** die Oberfläche des Elektrolyten im Vergleich zu dem Elektrolytmaterial-Substrat über die aufgebrachten Partikel vergrößert wird.

15. Verfahren nach einem der vorangehenden Ansprüche, **dadurch gekennzeichnet, dass** für die Oberfläche des Elektrolyten im Vergleich zu dem Elektrolytmaterial-Substrat eine dreidimensionale Oberflächenstruktur hergestellt wird.

16. Elektrolytischer Katalysatorträger für elektrochemische Anwendungen, welcher zur Aufbringung einer Katalysatorschicht (28) vorgesehen ist und bei welchem die Elektrolyt-Oberfläche/-Grenzfläche (32) als Grenzlage zum Katalysatormaterial durch an ein Elektrolytmaterial-Substrat (10) gebundene Elektrolytmaterial-Partikel hergestellt ist.

17. Elektrolytischer Katalysatorträger nach Anspruch 16, **dadurch gekennzeichnet, dass** die Elektrolyt-Oberfläche/-Grenzfläche (32) eine Struktur aufweist, welche durch das Aufbringen von Elektrolytmaterial-Partikeln auf das Elektrolytmaterial-Substrat (10) gebildet wird, wobei das Elektrolytmaterial-Substrat (10) beim Aufbringen der Elektrolytmaterial-Partikel aufgeheizt ist und/oder die Elektrolytmaterial-Partikel beim Aufbringen aufgeheizt sind.

18. Elektrolytischer Katalysatorträger nach Anspruch 16 oder 17, **dadurch gekennzeichnet, dass** die Elektrolyt-Oberfläche/-Grenzfläche (32) an einer Membran gebildet ist.

19. Elektrolytischer Katalysatorträger nach einem der Ansprüche 16 bis 18, **dadurch gekennzeichnet, dass** die Porenstruktur einer aufgebrachten Katalysatorschicht (28) mindestens eine Mode aufweist, welche von der Elektrolyt-Oberfläche/-Grenzfläche (32) verursacht ist.

20. Elektrolytischer Katalysatorträger nach einem der Ansprüche 16 bis 19, **dadurch gekennzeichnet, dass** die Porenstruktur einer aufgebrachten Katalysatorschicht (28) multimodal ist.

21. Elektrolytischer Katalysatorträger nach einem der Ansprüche 16 bis 20, **dadurch gekennzeichnet, dass** Porengrößen im Katalysator entsprechend der Größe von Elektrolytmaterial-Partikeln vorhanden sind.

22. Elektrochemische Elektrode, welche einen elektrolytischen Katalysatorträger gemäß einem der Ansprüche 16 bis 21 umfasst.

## Claims

1. Method for producing an electrolytic catalyst support with a catalyst layer for electrochemical applications, in which there are applied to a substrate made of electrolyte material particles of the electrolyte material, wherein the substrate is heated and/or the particles to be applied are heated, and catalyst material is subsequently applied to a surface layer made of electrolyte material.

2. Method in accordance with claim 1, **characterized in that** the electrolyte material is heated to above its glass temperature.

3. Method in accordance with claim 1 or 2, **characterized in that** the substrate is a membrane.

4. Method in accordance with any one of the preceding claims, **characterized in that** the electrolyte material is sprayed onto the substrate dry.

5. Method in accordance with claim 4, **characterized in that** the substrate is moved relative to one or more nozzles.

6. Method in accordance with any one of the preceding claims, **characterized in that** the particle size of the electrolyte material to be applied ranges between 0.5 µm and 50 µm.

7. Method in accordance with any one of the preceding claims, **characterized in that** the particle size of the electrolyte material to be applied to the substrate ranges between 2 µm and 20 µm.

8. Method in accordance with any one of the preceding claims, **characterized in that** the substrate is heated via a side facing away from the application side.

9. Method in accordance with claim 8, **characterized in that** the substrate is brought into thermal contact with a heater.

10. Method in accordance with any one of the preceding claims, **characterized in that** catalyst material is applied in the form of powder particles.

11. Method in accordance with claim 10, **characterized in that** the average particle size of the catalyst material is smaller than the average particle size of the electrolyte material.

12. Method in accordance with any one of the preceding claims, **characterized in that** catalyst material is sprayed onto the electrolytic catalyst support.

13. Method in accordance with any one of the preceding claims, **characterized in that** the heating time is less than 3 minutes.

14. Method in accordance with any one of the preceding claims, **characterized in that** the surface of the electrolyte is enlarged in comparison with the electrolyte material-substrate via the applied particles.

15. Method in accordance with any one of the preceding claims, **characterized in that** a three-dimensional surface structure is produced for the surface of the electrolyte in comparison with the electrolyte material-substrate,

16. Electrolytic catalyst support for electrochemical applications, which is provided for application of a catalyst layer (28), and in which the electrolyte surface/boundary surface (32) is produced as boundary layer to the catalyst material by electrolyte material-particles bonded to an electrolyte material-substrate (10).

17. Electrolytic catalyst support in accordance with claim 16, **characterized in that** the electrolyte surface/boundary surface (32) has a structure which is formed by applying electrolyte material-particles to the electrolyte material-substrate (10), and the electrolyte material-substrate (10) is heated during the application of the electrolyte material-particles and/or the electrolyte material-particles are heated during the application.

18. Electrolytic catalyst support in accordance with claim 16 or 17, **characterized in that** the electrolyte surface/boundary surface (32) is formed on a membrane.

19. Electrolytic catalyst support in accordance with any one of claims 16 to 18, **characterized in that** the pore structure of an applied catalyst layer (28) has at least one mode, which is caused by the electrolyte surface/boundary surface (32).

20. Electrolytic catalyst support in accordance with any one of claims 16 to 19, **characterized in that** the pore structure of an applied catalyst layer (28) is multimodal.

21. Electrolytic catalyst support in accordance with any one of claims 16 to 20, **characterized in that** pore sizes are present in the catalyst, which correspond to the size of electrolyte material-particles.

22. Electrochemical electrode, which comprises an electrolytic catalyst support in accordance with any one of claims 16 to 21.

## Revendications

1. Procédé de fabrication d'un support électrolytique de catalyseur avec une couche de catalyseur pour des applications électrochimiques, pour lequel des particules de matériau électrolytique sont appliquées sur un substrat de matériau électrolytique, le substrat étant chauffé et/ou les particules appliquées étant chauffées, puis un matériau catalyseur étant appliqué sur une couche de surface en matériau électrolytique.

2. Procédé selon la revendication 1, **caractérisé en ce que** le matériau électrolytique est chauffé au-dessus de sa température de transition vitreuse.

3. Procédé selon la revendication 1 ou 2, **caractérisé en ce que** le substrat est une membrane.

4. Procédé selon l'une quelconque des revendications précédentes, **caractérisé en ce que** le matériau électrolytique est pulvérisé sur le substrat à sec.

5. Procédé selon la revendication 4, **caractérisé en ce que** le substrat est déplacé par rapport à une ou plusieurs buses.

6. Procédé selon l'une quelconque des revendications précédentes, **caractérisé en ce que** la taille des particules du matériau électrolytique à appliquer est comprise dans l'intervalle entre 0,5 µm et 50 µm.

7. Procédé selon l'une quelconque des revendications précédentes, **caractérisé en ce que** la taille des particules du matériau électrolytique à appliquer sur le substrat est comprise dans l'intervalle entre 2 µm et 20 µm.

8. Procédé selon l'une quelconque des revendications précédentes, **caractérisé en ce que** le substrat est chauffé par une face détournée de la face d'application.

9. Procédé selon la revendication 8, **caractérisé en ce que** le substrat est amené en contact thermique avec un corps chauffant.

10. Procédé selon l'une quelconque des revendications précédentes, **caractérisé en ce que** le matériau catalyseur est appliqué sous la forme de particules de poudre.

11. Procédé selon la revendication 10, **caractérisé en ce que** la taille moyenne des particules du matériau catalyseur est plus petite que la taille moyenne des particules du matériau électrolytique.

12. Procédé selon l'une quelconque des revendications précédentes, **caractérisé en ce que** le matériau catalyseur est pulvérisé sur le support électrolytique de catalyseur.

13. Procédé selon l'une quelconque des revendications précédentes, **caractérisé en ce que** le temps de chauffage est inférieur à 3 minutes.

14. Procédé selon l'une quelconque des revendications précédentes, **caractérisé en ce qu'**en comparaison du substrat de matériau électrolytique, la surface de l'électrolyte est agrandie via les particules appliquées.

15. Procédé selon l'une quelconque des revendications précédentes, **caractérisé en ce qu'**une structure de surface tridimensionnelle est réalisée pour la surface de l'électrolyte en comparaison avec le substrat de matériau électrolytique.

16. Support électrolytique de catalyseur pour des applications électrochimiques, lequel est prévu pour l'application d'une couche de catalyseur (28) et pour lequel la surface/ l'interface de l'électrolyte (32) est réalisée comme couche limite avec le matériau catalyseur par des particules de matériau électrolytique liées à un substrat de matériau électrolytique (10).

17. Support électrolytique de catalyseur selon la revendication 16,**caractérisé en ce que** la surface/ l'interface de l'électrolyte (32) présente une structure qui est formée par l'application de particules de matériau électrolytique sur le substrat de matériau électrolytique (10), sachant que lors de l'application des particules de matériau électrolytique, le substrat de matériau électrolytique (10) est chauffé et/ou que les particules de matériau électrolytique sont chauffées lors de l'application.

18. Support électrolytique de catalyseur selon la revendication 16 ou 17, **caractérisé en ce que** la surface/l'interface de l'électrolyte (32) est formée sur une membrane.

19. Support électrolytique de catalyseur selon l'une quelconque des revendications 16 à 18, **caractérisé en ce que** la structure des pores d'une couche de catalyseur (28) appliquée comprend au moins un mode qui est provoqué par la surface/l'interface de l'électrolyte (32).

20. Support électrolytique de catalyseur selon l'une quelconque des revendications 16 à 19, **caractérisé en ce que** la structure des pores d'une couche de catalyseur (28) appliquée est multimodale.

21. Support électrolytique de catalyseur selon l'une quelconque des revendications 16 à 20, **caractérisé en ce qu'**il y a dans le catalyseur des pores dont la taille est conditionnée par la taille des particules de matériau électrolytique.

22. Électrode électrochimique comprenant un support électrolytique de catalyseur selon l'une quelconque des revendications 1.6 à 21.
